# EUROPEAN PATENT SPECIFICATION

(11) **EP 2 830 413 B1**
(45) Date of publication and mention of the grant of the patent: **21.11.2018**
(21) Application number: 12723261.9
(22) Date of filing: 26.03.2012
(51) Int. Cl.: A01G 33/00

(54) **PROFILE SECTION FOR THE CULTIVATION OF PHOTOSYNTHETIC ORGANISMS UNDER CONTROLLED CONDITIONS**
PROFIL ZUR KULTIVIERUNG PHOTOSYNTHETISCHER ORGANISMEN UNTER KONTROLLIERTEN BEDINGUNGEN
PROFIL POUR LA CULTIVATION DES ORGANISMS PHOTOSYNTHETIQUES SOUS DES CONDITIONS CONTROLLÉES

(43) Date of publication of application: 04.02.2015
(73) Proprietor: Arcobaleno Cooperativa Sociale, 10100 Torino (IT); Consorzio Proplast, 15050 Rivalta Scrivia, Tortona (AL) (IT); Politecnico Di Torino, 10129 Torino (IT); Università Degli Studi Di Torino, 10124 Torino (IT)
(72) Inventor: PASSARELLI, Fabio, 10100 Torino (IT); GIARGIA, Giacomo, 10100 Torino (IT); DEBERNARDI, Fabrizio, 10100 Torino (IT); GAROFANI, Giorgio, 10100 Torino (IT); CAVIGLIASSO, Piero, 10100 Torino (IT); AUGUGLIARO, Giuseppe, 15050 Rivalta Scrivia, Tortona (AL) (IT); CERINO ABDIN, Giulio, 13835 trivero (BI) (IT); NOUSSAN, Michel, 11010 Sarre (AO) (IT); COMINO, Elena, 10128 Torino (IT); ROSSO, Maurizo, 10128 Torino (IT); RIGGIO, Vincenzo, 10136 Torino (IT); MAFFEI, Massimo, 10124 Torino (IT); BONA, Francesca, 10124 Torino (IT); FRANCHINO, Marta, 101224 Torino (IT); CAPUZZO, Andrea, 10124 Torino (IT)
(74) Representative: Garavelli, Paolo
(86) International application number: PCT/IT2012/000092
(87) International publication number: WO 2013/144983

(56) References cited:
- EP-A1- 0 310 522
- US-A- 2 732 663
- US-A1- 2009 148 927
- PIETRO CARLOZZI: "Closed Photobioreactor Assessments to Grow, Intensively, Light Dependent Microorganisms: A Twenty-Year Italian Outdoor Investigation", THE OPEN BIOTECHNOLOGY JOURNAL, vol. 2, no. 1, 17 March 2008 (2008-03-17), pages 63-72, XP055473463, NL ISSN: 1874-0707, DOI: 10.2174/1874070700802010063

## Description

The present invention regards a profile section, in particular an alveolar panel, equipped with sealing systems for making a pressurised hydraulic circuit, preferably utilizable for the cultivation of photosynthetic organisms under controlled conditions.

The description that follows refers to the special, and preferable, case of a profile section made as an alveolar panel, but it is clear that the present invention is applicable to any type of profile section suitable for the purpose that the invention is intended to achieve.

The principal technology used for the production of this type of alveolar element is the extrusion of various types of plastics materials. This type of alveolar structure is mainly utilized in the construction sector, where it is used as a roofing and heat insulation element. The heat insulation mechanism is based on the possibility of trapping given volumes or air inside the alveolar chambers of the panel, which is why many products are found on the market with different chamber geometries and sizes. An attempt at using alveolar panels as a closed photobioreactor is described in "Closed photobioreactor assessments to grow, intensively, light dependent microorganisms: a twenty-year Italian outdoor investigation" assigned to Pietro Carlozzi in The Open Biotechnology Journal 2008, Volume 2.

The object of the present invention is therefore that of providing a system that enables a hydraulic circuit to be made inside an alveolar panel. This system generates the hydraulic seal with the internal sections of the panel, which can be exploited to create a serpentine or other type of hydraulic circuit, when required, or to create a connection between different panels.

The above-mentioned and other objects and advantages of the invention, as shall be apparent from the following description, are achieved with a profile section like the one described in claim 1 and with a system equipped with said profile section.

Preferred embodiments and non-obvious variants form the subject-matter of the dependent claims.

It shall appear immediately obvious that innumerable changes and modifications (for example, regarding the shape, size and arrangement and functionally equivalent parts) can be made to that described without departing from the scope of protection of the invention as revealed in the appended claims.

The present invention will now be better described by some preferred embodiments, provided by way of non-limitative example, with reference to the attached drawings, where:
- Figure 1 shows a model representative of the sealing system for the walls of the panel;
- Figure 2 shows a model representative of the sealing system for the walls of the panel in use;
- Figure 3 shows a representation of the modular elements for making a hydraulic circuit inside the panel;
- Figures 4 and 5 show a representation of the assembly steps of the modular elements for making a hydraulic circuit inside the panel;
- Figure 6 shows a representation of the sealed hydraulic circuit obtained by connecting the channels of the alveolar panel by means of the specially provided sealing systems;
- Figure 7 shows a representation of the sealed hydraulic circuit obtained by connecting the channels of the alveolar panel by means of an alternative sealing system; and
- Figure 8 shows a method for the production of organisms in a controlled environment through use of sealed hydraulic circuits derived from the alveolar panels made of a transparent plastic material and the specially provided sealing systems.

With reference to the figures, the system forming the subject of the present invention enables the circulation of pressurised liquids inside a profile section, in particular an alveolar panel, 1. To this end, the alveolar panel 1 is made of a transparent plastic material, in particular polycarbonate, and is provided with at least one liquid-tight sealing and connection element 3 to apply to the walls of the panel 1 to make a pressurised hydraulic circuit inside the channels 5 with which the panel 1 is equipped. For example, in the figures, the sealing and connection element 3 is made with a substantially box-like shape, with a sealing lip 4 against the respective channel 5 in which this element 3 is inserted; naturally, the sealing and connection element 3 can be of any shape, depending on the shape of the channel 5 that it is intended to seal and connect.

In this way, the system enables a hydraulic circuit to be made inside the alveolar panel 1. In fact, the system creates the hydraulic seal with the channels or internal sectors 5 of the panel 1, which can be exploited to create a serpentine or other types of hydraulic circuit should this be required, or to create a connection between different panels 1.

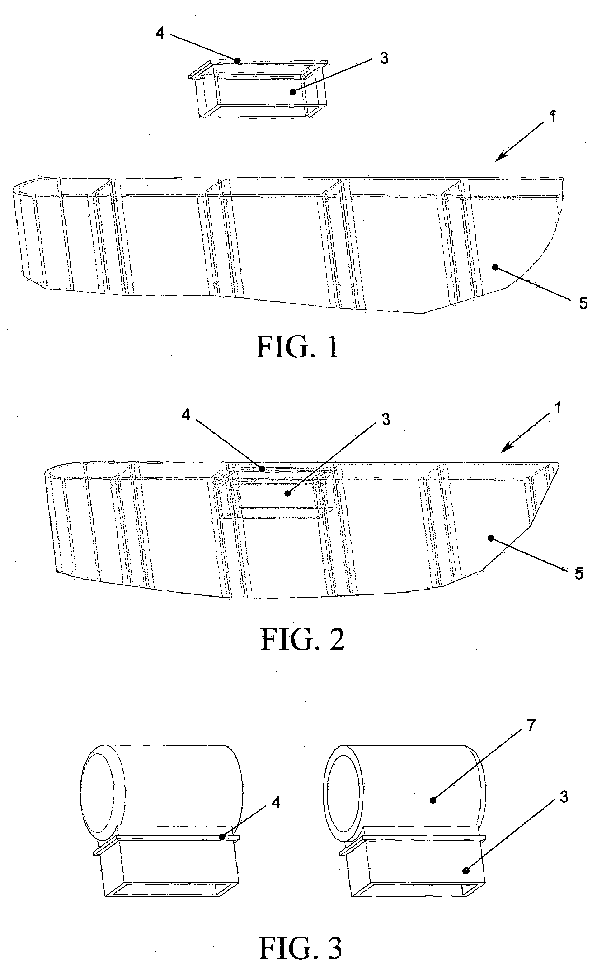

This concept is represented in Figures 1 and 2.

A solution to create a serpentine can be applied to this concept by exploiting the channels of the alveolar panel so as to create a continuous circuit inside the panel.

One or more parts (such as part 7 in Figures 3, 4 and 5 for example), which coupled together are able to form a curved channel and thus obtain the connection between two or more channels 5 of the panel 1, are used to obtain this circuit.

The constructional principle of this system is schematized in Figures 3, 4, 5, 6 and 7 by way of examples, which are not exhaustive.

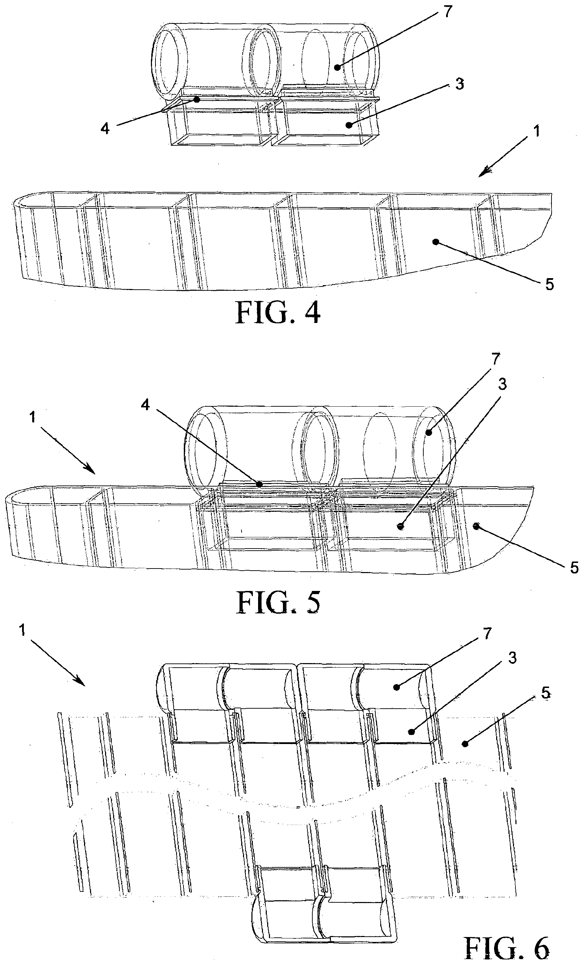

To ensure the seal between the two parts of the sealing and connection mechanism 3, the two parts 7 are coupled to each other by means of a particular geometry, or by making use of other seal parts (Figure 3 and Figure 4)

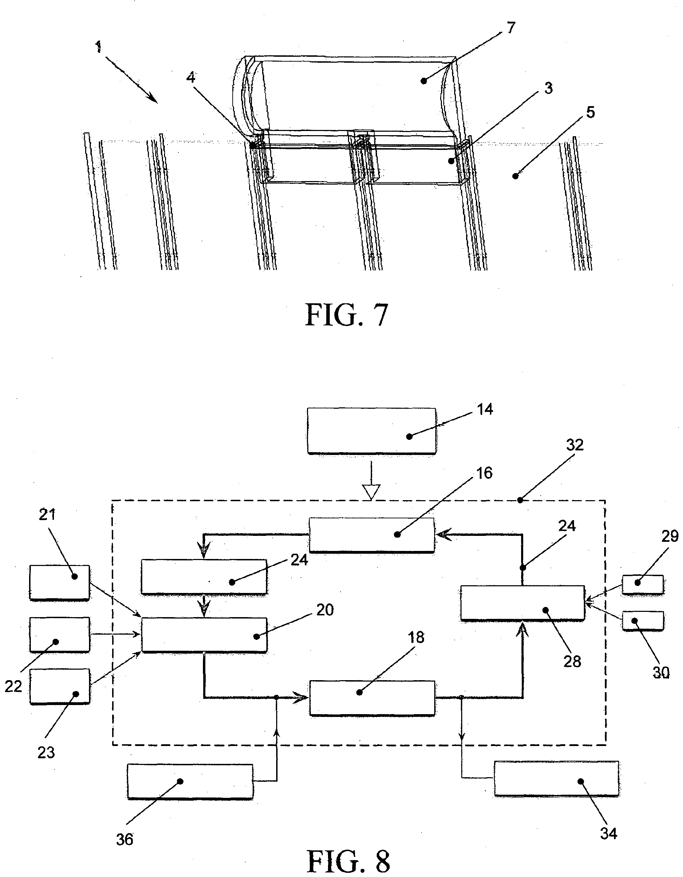

Once components 3 and 7 are coupled to each other, these parts are fitted onto the panel (Figure 5), thereby placing the two channels 5 of panel in communication, as shown in Figures 6 and 7.

These parts have been conceived and made using plastic polymers, with both transparent and coloured mouldings.

The system schematized herein can be applied to the various sections of the alveolar panels 1.

With this system of panel 1 - components 3 and/or 7, it is possible to make a system 14 for the production of photosynthetic organisms under controlled conditions, in turn composed of a series of principal apparatuses:
▪ at least one apparatus 16 for exposing culture liquids to sunlight;
▪ at least one liquid conveyance apparatus 18 operationally connected to apparatus 16; and
▪ at least one nutrient feed apparatus 20 operationally connected to apparatuses 16 and 18.

In addition, the above-mentioned system 14 is constituted by a series of secondary apparatuses:
▪ at least one liquid distribution apparatus 24, which operationally connects apparatuses 16, 18 and 20;
▪ at least one degassing apparatus 26 operationally connected to apparatuses 16 and 20;
▪ at least' one inoculation apparatus 28 for gaseous substances, operationally connected to apparatuses 16 and 18 through apparatus 24;
▪ at least one control and management apparatus 32 for the production parameters of the system 14;
▪ at least one harvesting apparatus 34 connected downstream of apparatus 18; and
▪ at least one loading apparatus 36 of the system 14 connected upstream of apparatus 18.

The apparatus 16 for exposing culture liquids to sunlight is formed by the system composed of the alveolar panel 1 in a transparent plastic material and by at least one of the previously described sealing and connection elements 3.

During passage through this apparatus 16, the photosynthetic organisms (not shown) follow the routes obtained through use of the sealing and connection elements 3 between one alveolar channel 5 and the next. During their passage, they are irradiated by light from the outside, absorbing the energy needed for the internal chemical reactions to take place, indispensable for absorbing carbon dioxide and its subsequent transformation into other types of molecules. The latter are indispensable for the correct nourishment of the photosynthetic organisms.

The possibility of preparing circuits composed of a substantial number of channels 5 enables the algae to be exposed to light for a significant amount of time. In consequence, the amount of light that the algae are able to receive is maximized for each complete cycle of passing through the system for the production of photosynthetic organisms under controlled conditions.

Furthermore, the liquid conveyance apparatus 18 is necessary because this conveyance serves to ensure that the entire population of organisms receives the same solar exposure, correct and constant access to sources of nourishment, and effective remixing of the liquids, so as to permit having the smallest possible gradient range for the various parameters everywhere inside the system 14.

In addition, the correct circulation speed of the culture liquids inside the system 14 for the production of organisms in a controlled environment reduces the risk of the organisms adhering to the surfaces of the walls of the solar exposure apparatuses 16 and reduces the risk of various types of agglomerate forming. The adhesion of organisms to the surfaces of the walls of the channels 5 results in a reduction in the amount of light available to the culture and requires subsequent mechanical and/or chemical cleaning of the channels 5; these phenomena of adhesion and the formation of agglomerates and the consequent cleaning operations can be significantly reduced by choosing the right speed for the liquid according to the organisms being cultivated.

The guarantee that all of the culture liquid periodically circulates inside all of the apparatuses of the system 14 enables all of the necessary treatments to be performed on all of the culture liquid contained in the system 14.

The pumps (not shown) for the conveyance of the liquids are chosen according to the quantity of liquid that must be conveyed and the type of pump used is quite important. The choice must be made with the aim of not damaging the cells when the speed set for the liquid becomes significant. For these reasons, the choice of pumps is not made just on the basis of their mechanical or volumetric efficiency, but also ensuring that the system of transferring power to the liquid does not cause excessive damage to the cells. The correct choice of the liquid conveyance systems 18 also enables a reduction in energy consumption related to the circulation of the liquids inside the system 14.

The nutrient feed apparatus 20 is fundamental for enabling the organisms to be provided with all substances 21 necessary for their physiological needs. This apparatus can have different types of structure, to be evaluated according to the needs that must be met.

For cultivations in which the necessary nutritive substances are completely dissolved in the culture liquid, in a temporal step prior to that of feeding into the plant, the quantities of nutrients are normally such as to be sufficient for the entire period of cultivation without replenishment being necessary; in these cases, the nutrient feed apparatus 20 is used to fill the plant with fresh liquid for the culture after the step of emptying and harvesting in some sectors of the system 14.

When the cultivations require periodic or occasional replenishment of substances necessary for the growth and preservation of the cells, this apparatus 20 can also be used to add the necessary substances.

The apparatus 20 also enables the nutrients to be integrated with organic substances 22 coming from the waste of livestock farms, residues of anaerobic digestion processes 23 or other types of waste products coming from industrial processing or agricultural cultivation. The liquid fraction can be added directly to the feed apparatus 20 and adequately mixed before entering into circulation inside the plant.

The liquid distribution apparatus 24 has the function of connecting the various apparatuses that make up the system 14 to each other and enabling the full circulation of the liquids inside all of the apparatuses, necessary for cultivating the organisms in the best possible way.

To improve the efficiency of the system 14, the distribution of the liquids can be carried out using tubes made of a plastic material (not shown). The main characteristics associated with this type of tubing are flexibility and transparency. The flexibility of the connection elements between the various apparatuses of the system 14 permits simpler connection and, secondly, reduces head losses due to the sudden changes of direction that would occur with the use of more rigid materials. Instead, the possibility of using transparent materials permits the time of solar exposure per flow cycle of liquid inside the system 14 to be extended; with this solution, the organisms contained in the culture liquid are able to receive the necessary energy for their metabolic functions not only during the period of time used to flow through the sunlight exposure apparatuses 16, but also during all of the periods of time necessary for transfer from one apparatus to the next. In addition to an advantage in terms of the amount of light that irradiates the organisms per flow cycle of the plant, with this technical solution there is a reduction in the light/shadow alternations to which the organisms are subjected and that in certain cases can entail physiological stress, resulting in a reduction in productivity. On large-scale systems 14, and therefore with connection segments of considerable length between the apparatuses, this solution is found to have a significant effect, while on smaller sized systems 14, the choice can also favour materials that are non-transparent, but which guarantee longer component life. Furthermore, it is possible to directly observe the correct flow of the liquid in the more critical points.

The design of the distribution network for the liquids can also comprise the positioning of opportune holding and deviation mechanisms (not shown). The holding mechanisms are necessary to ensure that the culture liquid is not dispersed into the outside environment in the event of malfunctions in the system 14. The deviation mechanisms, instead, have various functions: they allow the system 14 to be divided into separate sections, which enables several cultivations to be developed in parallel that differ from one another either for the moment of inoculation or the species of organism cultivated, or yet still for the level of development to which it is wished to take the cultivation. Another function of the deviation mechanisms is to enable sending the culture liquid, at the time of harvesting, to the dedicated apparatuses in the most rapid and efficient manner possible and without interfering with the other sectors of the system 14; similarly, the deviation mechanism enable the same sectors of the system 14 to be refilled after they have been emptied for harvesting. The possibility of dividing the system 14 into sectors also permits carrying out routine and extraordinary maintenance in limited areas without requiring the entire system 14 to be halted for every maintenance operation or other type of operation, which results in increased system productivity.

The degassing apparatus 26 is fundamental for all systems 14 'with which it is intended to cultivate photosynthetic organisms of aquatic origin. Degassing is a necessary process to allow part of the oxygen produced by the organisms during photosynthesis to be removed from the culture liquid. The need to remove part of the oxygen produced is due to the fact that this gas has a growth inhibition effect if its concentrations are too high.

The degassing process can be carried out using various methods, to be evaluated according to the final use that it is intended to make of the organisms obtained by cultivation.

The simplest system for performing this operation is to also use the nutrient feed apparatus 20 as a degassing apparatus. This can be done by providing opportune openings through which the liquid comes into direct contact with the outside environment, levelling its pressure to that of the surroundings. The pressure difference between the gas parts contained in the liquid and the outside environment is sufficient to cause the transfer of the excess oxygen part from the culture liquid to the atmosphere. Direct contact with the external atmosphere can entail the risk of contamination by other organisms or micro-organisms, potentially invasive or harmful for the vital functions of those being cultivated, which can be reduced by providing special filtering apparatuses, which trap the majority of contaminating organisms present in the air that passes through them.

If the nutrient feed apparatus 20 is not present or it is wished to further reduce the risk of contamination for the culture, (as happens in the production of organisms and compounds for the pharmaceutical industry for example), the degassing apparatus 26 can be of a different type. Special pressure switches (not shown) can be provided, which are able to maintain a set reference pressure by operating to free part of the gas contained in the system whenever the internal pressure exceeds the set level. This type of apparatus ensures that the flow of gaseous substances is mainly from inside the system 14 to the outside, thus without allowing air from the outside environment to penetrate the system 14. This enables having almost no direct contact between the culture and the air of the outside environment, which is a potential carrier of contaminating organisms.

This type of degassing apparatus 26 requires greater accuracy in the calibration and control steps with respect to the previous one, as a setting with levels too low can cause leakage of part of the culture liquid, with a consequent drop in productivity and the risk of polluting the outside environment; conversely, a setting with levels too high can cause excess gases present in the culture not to be expelled and the consequent risk of growth inhibition phenomena.

The positioning of these apparatuses must be opportunely evaluated, and possibly made at a significant distance from the apparatuses destined to inoculate gaseous substances. The risk that is run in the case of too short a distance between the inoculation apparatuses 28 (described further on) and the degassing ones 26 is of having an immediate dispersion of the gaseous substances just injected (especially CO₂ 30 for increasing productivity), without having the necessary time to ensure that they are assimilated by the organisms present or at least completely solubilize in the culture liquid. When pure CO₂ gas 30 is used in intensive cultivation systems, the maximization of its assimilation has significant repercussions, especially at the economic level, due to the price of the raw materials used.

With regard to the apparatus 28 for inoculating gaseous substances (such as fumes 29 and CO₂ 30), the opportunity to use gaseous substances is mainly exploited to increase the productivity of the organisms and, in certain cases, as a factor for the containment of contaminating agents. The main gaseous substance supplied is carbon dioxide 30, which is necessary for the metabolic processes of the photosynthetic organisms, guaranteeing them the carbon needed for the synthesis of the substances necessary for their survival and growth. Another function of carbon dioxide is to limit phenomena of contamination by aerobic and anaerobic micro-organisms, which are unable to survive in environments with a high percentage of this molecule.

The inoculation apparatus 28 for gaseous substances is formed by a combination of various types of systems, destined to inject the gaseous substances into the liquid with a sufficiently turbulent motion that guarantees appropriate initial mixing.

The positioning of the inoculation apparatuses 28 for gaseous substances should be performed taking two main aspects into account: 1) gases must be injected in an area of the system 14 as far away as possible from those in contact with the air of the outside environment, so as to reduce possible dispersion of gaseous substances to a minimum and increase the time available for the organisms to assimilate the nutritive elements to the maximum; 2) the positioning of the inoculation apparatuses 28 for gaseous substances downstream with respect to the liquid pumping and circulation apparatuses 18 to avoid the risk of cavitation due to the higher percentage of gas inside the mixture circulating in the system 14.

The inoculation apparatus 28 for gaseous substances can also be used as a system for using the combustion fumes 29 as an additional source of CO₂; the use of combustion fumes must be combined with a control system that evaluates the injection temperature and the quantity/quality of the fumes introduced, in order to avoid thermal or chemical stress that could compromise the functionality of the cells.

The entire system of liquid circulation and cultivation of organisms in a controlled environment can provide monitoring and control apparatuses 32 for production parameters, established according to the type of organism produced and its commercial destination. The monitoring of cultivation parameters enables having all of the data available to analyse the growth process of the organisms and assess the efficiency of changes that are made in the cultivation step, in order to plan future developments. The control system permits corrective actions to be carried out if variations in the parameters go beyond set limits.

A temperature level outside the limits supportable by the organisms results in physiological stress that can even cause their death and therefore loss of the cultivation. An efficient control system enables temperature of the culture liquid to be detected and, if it exceeds set values, to activate a heat exchanger (not shown) that allows the necessary amount of heat to be supplied or removed to return the temperature of the liquid to within the desired range. The speed with which the heat exchanger intervenes must be calibrated according to the tolerance of the organisms to variations in temperature.

A sufficient concentration of CO₂ in the culture liquid is necessary, not only to guarantee the correct intake of nutrients in the medium, but also as a system of limiting contaminating agents that could compromise the quantity and quality of the organisms produced. Control of CO₂ concentration permits identifying when it drops below a critical condition, such as to cause dietary stress or the risk of contamination by infesting agents, and to intervene by increasing the source of this substance in a manner so as to return the concentration to optimal values.

Measurement of oxygen concentration permits assessing whether the degassing systems are suitably calibrated and if they are functioning correctly. If monitoring indicates oxygen values above the limits, it is possible to intervene with opportune corrective actions before this situation results in growth inhibition of the organisms.

Measurements of the pH or salinity enable estimating the amount of nutrients present in the culture medium and determining the absorption rate of the organisms.

All of the corrective actions for restoring the values of parameters to within optimal ranges can be controlled by an opportune software system that calculates the duration and entity of the corrective actions in real time.

The harvesting apparatus 34 enables carrying out the last step of the production process of organisms in a controlled environment. The task of this apparatus 34 is to separate the solid part, formed by the cells that have developed during the cultivation cycle, from the liquid part, mainly composed of water and in which some residual cell-nutrition elements may still be dissolved.

The harvesting mechanism can be of various types, to be chosen according to the size and weight of the cells that must be harvested; the systems that can be used could be sedimentation tanks (not shown), which exploit force of weight, or centrifuges and hydrocyclones (not shown), which exploit the effects of centrifugal force. In addition to the characteristics of the cells, the choice of harvesting apparatus 34 also takes into consideration the times available for this step, the harvesting efficiency that it wished to achieve and the economic and energy costs to be faced. Systems that exploit the force of gravity can need more time for the separation between the solid part in suspension and the liquid part, but have correspondingly lower energy consumption for this step; conversely, centrifugal systems guarantee greater efficiency and shorter harvesting times, but at the same time entail higher energy consumption and greater investment costs for the necessary equipment.

Harvesting efficiency, or rather the percentage of solid substances that can be retrieved from the liquid, and the associated costs sustained to obtain it, are assessed according to the production chain that the organisms produced must follow. Production output for cosmetic or pharmaceutical applications, for which the corresponding added value is very high, can justify larger investments for harvesting and disregard energy consumption; conversely, the production of biomass for energy purposes, set within a context of sustainability, must evaluate how much the energy consumption for harvesting weighs on the global energy balance.

In situations of large-scale production with low added value, it might even be intentional to only separate and harvest a certain percentage of the organisms produced, using the remaining part in solution as an inoculum for the next cultivation. This procedure is evaluated according to the capacity of the selected cells to reproduce at the end of a cultivation cycle.

The operation of the above-described system 14 will now be described.

The culture liquid, constituted by water and a solution of macro and micro-nutrients, in which algal cells or other photosynthetic micro-organisms and otherwise can be contained, is inserted into the plant through the nutrient feed apparatus 20. When the amount of liquid inside the nutrient feed apparatus 20 reaches a set value, the liquid conveyance apparatus 24 is activated, which is composed of a number of pumping elements such as to guarantee operation of the system with a certain level of reliability.

The liquid conveyance apparatus 24 pumps the culture liquid inside the distribution apparatus, through which it reaches a predetermined sector of the system 14 and starts to circulate inside the panels 1. When a sufficient quantity of the culture liquid has been taken in, the nutrient feed apparatus 20 is closed to reduce the risk of contamination by external agents.

The liquid inside the panels 1 follows the predetermined routes, opportunely created through use of the connection apparatuses 3 and 7 between the alveolar elements 5 of the panel 1 in polycarbonate or PMMA. These routes are chosen with the objective of maximizing the solar exposure time and reducing head losses and the consequent energy consumption associated with them. Apart from the route set up inside the various elements 5 of the panel 1, another factor that maximizes the solar exposure is the high surface/volume ratio that can be obtained with this type of panel 1.

Through exposure to sunlight, the organisms receive the energy necessary for photosynthesis. At the end of the step of exposure to sunlight in the specially provided apparatuses, the liquid is sent to the degassing tank, where part of the oxygen produced during photosynthesis is freed. Through this tank it is also possible to compensate the possible lack of some nutritive substances inside the culture liquid. Once the system 14 has been filled and reached normal running conditions, the culture liquid starts to cyclically circulate inside the system 14.

The cultivation and growth step of the organisms correspond to this state, in which the organisms use the elements dissolved in the liquid as nutrients and synthesise them into substances needed for their metabolism thanks to the energy received from the light shining on them. The actual period of cultivation is not always the same: it actually depends on the species of organism that it is wished to grow, the external climatic conditions (hours of light and temperature) and on what the chemical-physical properties are of the elements that it is wished to obtain from the cultivation.

The cultivation step, typified by continual circulation inside the plant, can be considered concluded when it is noted from periodic analysis that the planned objectives have been met, which could be expressed in terms of biomass quantity or type of metabolites. Studies on models and growth times of the organisms permit standard times to be calculated for when to harvest, without making periodic analysis of the cultivation necessary during its development.

When the period of circulation inside the plant ends, the culture liquid is sent to the biomass harvesting and separation apparatuses 34. This transfer is carried out using the deviation apparatuses present in all the distribution circuits. Opportune deviation valves are provided that enable the culture media contained in the plant sectors that it is intended to empty to be sent to the harvesting systems without affecting the functionality of the adjacent sectors. Depending on the dimensions of the system and thus the quantity of liquid that must be transferred, the conveyance apparatus can be completely automated or controlled by an operator for the emptying and transfer operations.

It should be noted that the nutrient feed apparatus 20 and inoculation apparatus 28 for gaseous substances render the system 14 ready prepared to receive numerous forms of waste products from other energy and industrial processes, to use them as a supplementary source of nutritive elements present in the culture liquid. Among the main ones, it is possible to mention sewage 22 from the food industry and otherwise, liquid fractions 23 coming from anaerobic digestion plants, waste coming from livestock farms and combustion fumes 29 present in many industrial processes.

With regard to the hydraulic characteristics of the system 14, it provides for the use of pressurized and unpressurized hydraulic steps. In the specific instance, all of the liquid present downstream of the pumps is sent in circulation in sealed conduits so as to have the possibility of controlling pressure and linear speed. The system is designed and implemented so that a certain level of redundancy exists in an emergency and/or situation of the pumps not working. In the case where it is not possible to rely upon mechanical conveyance, the various apparatuses of the system 14 could be drained by gravity (if planned). These stratagems are necessary to avoid abnormal development of organisms left in a situation of null fluid conveyance.

In apparatuses at atmospheric pressure, the liquid remains there for predetermined periods of time and is then released inside the system 14 by the use of pumps and/or gravimetric fall.

As organisms, microalgae can be cultivated in the system 14.

### ▪ Definition

Microalgae comprise eukaryote organisms of microscopic size, with a phototrophic (obtaining energy from light) and in general autotrophic (using inorganic carbon as a source of carbon) metabolism. They are generally, but not exclusively, found in an aquatic environment, where they represent the largest primary production. Microalgae differ from prokaryotes, such as cyanobacteria and prochlorophytes, by possessing a nucleus covered in a proper nuclear membrane, inside which the chromosomes and the nucleolus are found. The cytoplasm is divided into compartments and contains organules provided with a membrane (Golgi apparatus, mitochondria, endoplasmic reticulum, vacuoles, centrioles and plastids).

### ▪ Method of reproduction and growth

In the majority of cases, reproduction of microalgae takes place in a vegetative manner, through cell division, and it is through this mechanism that the biomass of the culture increases with time. In a typical batch culture, four growth steps can be distinguished: 1) the initial adaptation step, where the specific growth rate is sub-optimal; 2) the exponential step where growth takes place as an exponential function of time, until limited by the availability of light and nutrients; 3) the linear step where growth slows down after reaching the maximum growth rate; 4) the stationary step where the production of further biomass ceases.

### ▪ Fields of application of microalgal cultures

Interest in the use of algae and their cultivation regards many fields, from human nutrition to the pharmaceutical and cosmetics industry, from the production of animal feed to the production of energy. Interest in these organisms is linked to their high growth rate, tolerance to a vast range of environmental conditions and, more in general, to their metabolism and photosynthetic efficiency. With respect to terrestrial plants, the operational advantages of microalgal cultures can be summarized as follows:
1) Algal cultures can be developed on land not destined to agriculture and of little value.
2) No pesticides are needed.
3) In many cases, they can grow in low-cost mediums, such as seawater or various types of waste water.
4) They are less subject to seasonal changes.
5) The costs associated with harvesting and transportation are generally less than those for plants, when cultivated outdoors in the so-called "race-ways". Costs can vary if cultivated in photobioreactors.

From the energy viewpoint, it is known that certain species of microalgae can, under special culture conditions, accumulate lipids suitable for the production of biodiesel, constituting a promising alternative to fossil fuels and first and second generation biodiesel through transesterification, hydrogenation or even anaerobic digestion for the production of biogas and biomethane. The use of microalgae for the production of biofuels can be coupled with other processes, such as the removal of CO₂ from combustion fumes through assimilation, or the treatment of waste waters to remove nitrogen compounds and phosphorus compounds. After extraction of the oil, the remaining biomass can be processed to extract other compounds of interest such as PUFA (polyunsaturated fatty acids), sugars, pigments, antioxidants, etc., or simply burnt to produce energy.

### ▪ Design factors of the organism cultivation system in relation to the microalgae culture

The most important factors to consider in the design of the cultivation system regard the presence of:
a) Light radiation, natural or artificial. The shape of the alveolar panel in polycarbonate facilitates the penetration of light both due to its transparency and due to the small size of the alveoli. The optical properties of the culture medium can also affect the penetration of light: therefore, its turbidity must be controlled.
b) A culture medium, the composition of which varies according to the strain used and the products it is wished to obtain. The presence of macro-nutrients (such as nitrogen, phosphorus, calcium, potassium and iron) and micro-nutrients in a buffered aqueous solution are common to all mediums.
c) A source of carbon, normally provided as CO₂, which must be modulatable according to the growth needs and taking the pH into account.
d) A remixing system to render exposure to the light and the availability of nutrients homogeneous throughout the culture and to avoid deposit phenomena on the walls of the panel.
e) A degassing system to eliminate the excess oxygen produced by photosynthesis and a temperature control system.

The operation of the effluent purification system will now be described.

The effluent purification system can be used downstream of a multitude of industrial, civil and agricultural/zootechnical processes. It can be inserted in a water treatment scheme either as a pre-treatment process or as the main process, or even as a finishing process. It mainly consists of the same apparatuses present in the system for the production of photosynthetic micro-organisms in a controlled environment. In fact, in addition to a sufficient quantity of carbon dioxide, these micro-organisms also need nutrients for their development and growth.

The nutrient feed apparatus is therefore modified to enable the intake of opportunely pre-treated and diluted sewage. The system can be used for processing monospecific sewage of a civil, industrial and agricultural/zootechnical nature.

It can also be set up for the treatment of opportunely mixed waste to optimize the chemical-physical properties of the mix. The treatment would permit attaining two objectives: reduction in the pollutant load in the waste and/or growth in the biomass used. Depending on the final objective, the monospecificity of the micro-organisms can be more or less sought for. The advantages of using this system are evident from both the environmental. viewpoint (given that reductions of over 80% are envisaged for the main undesired elements) and the economic viewpoint (savings in the treatment process, reutilization of purified water and utilization of waste to produce a product of value).

The use of sewage contemplates that the system be equipped with a control apparatus able to act in an automatic and/or semi-automatic manner for correctly dosing the sewage into the conveyed liquids. The parameters regarding the density of the liquid, turbidity, pH, injection temperature and the level of suspended solids are found to be more critical and should therefore be monitored frequently.

Furthermore, the main chemical-physical parameters (such as C.O.D., B.O.D., alkalinity, various forms of nitrogen, phosphorus, potassium, magnesium and the principal pathogenic bacteria) should be evaluated by means of specific analysis. As it is a purification system, the biomass collected should be opportunely analysed so as to be able to handle it in the most appropriate manner.

The operation of the CO₂ reduction system will now be described.

The CO₂ reduction system can be used in combination with many industrial processes where combustion plants are provided- for the generation of thermal energy or related products.

The CO₂ reduction system consists of the same apparatuses present in the system for the production of photosynthetic organisms in a controlled environment. For their development and growth, these need a sufficient quantity of CO₂ that they convert, through photosynthetic carbon reactions, into organic molecules useful for their nourishment. A concentration of CO₂ higher than the atmosphere's standard level increases the system's productivity.

Carbon dioxide is also necessary as an agent for limiting contaminating organisms; the acceptable level of contamination by micro-organisms depends on the use that it is intended to make of the obtained production: in fact, a certain amount of organisms other than those of the original production can even be admissible for some energy uses; conversely, for productions destined to the pharmaceutical, cosmetic and food chains, the presence of contaminants that might alter the quality of the obtained products is not admissible.

It is possible to prepare apparatuses that enable a part of the carbon dioxide contained in the discharge fumes of various types of combustion plants to be captured. The possibility of recovering part of the CO₂ present in fumes before they are dispersed into the environment provides advantages both in environmental and economic terms. From the environmental viewpoint, with this technical solution there is the possibility of absorbing part of the emissions of carbon dioxide, the main greenhouse-effect gas, before it is dispersed into the atmosphere: in doing so, it is possible to give a useful end for the discharged fumes of combustion plants, which up till now have been viewed only as a problem to be solved. Even the economic effect can be considerable: in fact, when the apparatuses are opportunely optimised and therefore enable vast amounts of carbon dioxide to be recovered, it is possible to reduce the quantity that it is necessary to purchase.

For an optimal utilization of discharge fumes as a source of CO₂, control mechanisms are needed that monitor temperature and pH and that also quantify the other substances contained in the fumes that are injected into the system. This control is necessary to ensure that conditions are not created inside the system such as to jeopardise survival of the cells, upon which the entire CO₂ absorption mechanism is based.

The control can invoke corrective actions destined to return the parameters to within their optimal ranges either by modifying the quantities and conditions of the injected fumes, or intervening on the other apparatuses of the plant. According to the combustion plant from which it is intended to recover the fumes, it is possible to provide opportune mechanisms for maintaining the right pressures that enable correct operation of the combustion plant, and the right mixes and absorptions by the system under consideration.

In general, control of the concentration of O₂, CO₂ and the nutrients dissolved in the culture medium, as well as continuous evaluation of the pH values, is still required.

The inventive profile section 1 can also be used for making pressurised sealed hydraulic circuits in building, architectural, design and leisure applications.

## Claims

1. System (14) for the production of photosynthetic organisms under controlled conditions, comprising:
▪ at least one apparatus (16) for exposing culture liquids to sunlight, constituted by at least one alveolar panel (1), made of a transparent plastic material, in particular polycarbonate, provided with at least one substantially box-like liquid-tight sealing and connection element (3) and having walls adapted to liquid-tightly mate with the walls of a respective one of the channels (5) with which said alveolar panel (1) is equipped, each one of said liquid-tight sealing and connection elements (3) further comprising at least one part (7) adapted to be operatively and liquid-tightly coupled with a respective part (7) with which another liquid-tight sealing and connection element (3) is equipped, in order to make a liquid-tight pressurised hydraulic circuit between at least two channels (5) of said alveolar panel (1);
▪ at least one liquid conveyance apparatus (18) operationally connected to said apparatus (16); and
▪ at least one nutrient feed apparatus (20) operationally connected to said apparatus (16) for exposing culture liquids to sunlight and to said liquid conveyance apparatus (18).

2. System (14) according to claim 1, further comprising:
▪ at least one liquid distribution apparatus (24), which operationally connects said apparatus (16) for exposing culture liquids to sunlight, said liquid conveyance apparatus (18) and said nutrient feed apparatus (20);
▪ at least one degassing apparatus (26) operationally connected to said apparatus (16) for exposing culture liquids to sunlight and to said nutrient feed apparatus (20);
▪ at least one inoculation apparatus (28) for gaseous substances, operationally connected to said apparatus (16) for exposing culture liquids to sunlight and to said liquid conveyance apparatus (18) by means of said liquid distribution apparatus (24) ;
▪ at least one control and management apparatus (32) for the production parameters of said system (14);
▪ at least one harvesting apparatus (34) connected downstream of said liquid conveyance apparatus (18); and
▪ at least one loading apparatus (36) of said system (14) connected upstream of said liquid conveyance apparatus (18).

3. Use of the system (14) according to claim 1 or 2 for the cultivation and production of unicellular algae or other photosynthetic micro-organisms.

4. Use of the system (14) according to claim 1 or 2 for the production and extraction of secondary metabolites or other substances of commercial, pharmaceutical or biomedical interest.

5. Use of the system (14) according to claim 1 or 2 for the purification of sewage of civil, industrial and agricultural-zootechnical origin.

6. Use of the system (14) according to claim 1 or 2 for the assimilation of carbon dioxide.

7. Use of the system (14) according to claim 1 or 2, wherein said at least one nutrient feed apparatus (20) uses sewage of civil, industrial and agricultural-zootechnical origin as a source of nutriment for the cultivated organisms.

8. Use of the system (14) according to claim 1 or 2, wherein said at least one nutrient feed apparatus (20) uses digestate, a residue of the anaerobic digestion processes of biomasses, as a source of nutriment for the cultivated organisms.

9. Use of the system (14) according to claim 1 or 2, wherein the biomasses utilizable for the anaerobic digestion process are produced by said system (14).

10. Use of the system (14) according to claim 1 or 2, wherein said at least one inoculation apparatus (28) for gaseous substances further uses combustion fumes (29) as a source of nutriment for the cultivated organisms.

11. Use of the system (14) according to claim 1 or 2, wherein the system (14) is prepared for the recovery of waste substances from other production processes that are not directly connected with it.

12. Use of the system (14) according to claim 1 or 2, wherein said at least one degassing apparatus (26) performs the cultivation of photosynthetic organisms in a controlled environment, thereby enabling the elimination of excess oxygen produced during photosynthesis.

13. Use of the system (14) according to claim 1 or 2, wherein said at least one liquid conveyance apparatus (24) performs the cultivation of organisms by ensuring that all the cells inside the culture periodically pass through all of the provided apparatuses and receive the necessary treatments.

## Patentansprüche

1. System (14) zur Herstellung von photosynthetischen Organismen unter kontrollierten Bedingungen, das Folgendes enthält:
▪ mindestens eine Vorrichtung (16) zur Exposition von Kulturflüssigkeiten gegen Sonnenlicht, bestehend aus mindestens einer Wabenplatte (1) aus transparentem Kunststoff, insbesondere Polycarbonat, die mit mindestens einem flüssigkeitsdichten Dichtungs- und Verbindungselement (3) ausgestattet ist, das im Wesentlichen schachtelförmig ist, und mit Wänden, die zur flüssigkeitsdichten Verbindung mit den Wänden eines der Kanäle (5) dienen, mit denen die Wabenplatte (1) ausgestattet ist, jedes der genannten flüssigkeitsdichten Dichtungs- und Verbindungselemente (3) enthält außerdem mindestens ein Teil (7), das mit einem entsprechenden Teil (7= mit dem ein anderes Dichtungs- und Verbindungselement (3) ausgestattet ist) betriebsmäßig gekoppelt und flüssigkeitsdicht ist, um zwischen mindestens zwei Kanälen (5) der genannten Wabenplatte (1) einen Hydraulikdruckkreislauf herzustellen;
▪ mindestens eine Flüssigkeitshandhabungsvorrichtung (18), die betriebsmäßig mit der genannten Vorrichtung (16) verbunden ist; und
▪ mindestens ein Nährstoffabgabesystem (20), das betriebsmäßig mit der genannten Vorrichtung (16) zur Exposition von Kulturflüssigkeiten gegen Sonnenlicht und mit dieser Flüssigkeitshandhabungsvorrichtung (18) verbunden ist.

2. System (14) gemäß Patentanspruch 1, das außerdem folgendes enthält:
▪ mindestens ein Flüssigkeitsverteilungssystem (24), das diese Vorrichtung (16) zur Exposition von Kulturflüssigkeiten gegen Sonnenlicht betriebsmäßig mit der genannten Flüssigkeitshandhabungsvorrichtung (20) und dem genannten Nährstoffabgabesystem (20) verbindet;
▪ mindestens einen Entgaser (26), der betriebsmäßig mit der genannten Vorrichtung (16) zur Exposition von Kulturflüssigkeiten gegen Sonnenlicht und mit dem genannten Nährstoffabgabesystem (20) verbunden ist;
▪ mindestens eine Injektionsvorrichtung (28) der gasförmigen Substanzen, die betriebsmäßig mit der genannten Vorrichtung (16) zur Exposition von Kulturflüssigkeiten gegen Sonnenlicht und mit der genannten Flüssigkeitshandhabungsvorrichtung (18) durch das genannte Flüssigkeitsverteilungssystem (24) verbunden ist;
▪ mindestens eine Kontroll- und Verwaltungsvorrichtung (32) der Produktionsparameter des genannten Systems (14);
▪ mindestens eine Sammelvorrichtung (34), die unterhalb der genannten Flüssigkeitshandhabungsvorrichtung (18) verbunden ist; und
▪ mindestens eine Befüllungsvorrichtung (36), des genannten Systems (14), die oberhalb der genannten Flüssigkeitshandhabungsvorrichtung (18) verbunden ist.

3. Verwendung des Systems (14) gemäß Patentanspruch 1 oder 2 für die Zucht und die Produktion von einzelligen Algen oder anderen photosynthetischen Mikroorganismen.

4. Verwendung des Systems (14) gemäß Patentanspruch 1 oder 2 für die Produktion und Extraktion sekundärer Metaboliten oder anderer kommerziell, pharmazeutisch und biomedizinisch interessanten Substanzen.

5. Verwendung des Systems (14) gemäß Patentanspruch 1 oder 2 für die Reinigung von städtischem, industriellem und agro-zootechnischem Abwasser.

6. Verwendung des Systems (14) gemäß Patentanspruch 1 oder 2 für die Assimilation von Kohlendioxid.

7. Verwendung des Systems (14) gemäß Patentanspruch 1 oder 2, in dem das genannte mindestens eine Nährstoffabgabesystem (20) städtisches, industrielles und agro- und zootechnisches Abwasser als Nährquelle der gezüchteten Organismen verwendet.

8. Verwendung des Systems (14) gemäß Patentanspruch 1 oder 2, in dem das genannte mindestens eine Nährstoffabgabesystem (20) Digestat verwendet, einen Rückstand anaerobischer Verdauungsprozesse der Biomassen als Nährquelle für die gezüchteten Organismen.

9. Verwendung des Systems (14) gemäß Patentanspruch 1 oder 2, in dem die verwendbaren Biomassen für die anaerobischen Verdauungsprozesse durch das genannte System (14) produziert werden.

10. Verwendung des Systems (14) gemäß Patentanspruch 1 oder 2, in dem die genannte mindestens eine Injektionsvorrichtung (28) der gasförmigen Substanzen außerdem Verbrennungsdämpfe (29 als Nährquelle für die gezüchteten Organismen verwendet.

11. Verwendung des Systems (14) gemäß Patentanspruch 1 oder 2, in dem das System (14) für die Rückgewinnung der Abfallstoffe aus anderen Produktionsprozessen vorbereitet ist, die nicht direkt mit diesen verbunden sind.

12. Verwendung des Systems (14) gemäß Patentanspruch 1 oder 2, in dem der genannte mindestens eine Entgaser (26) die Zucht der photosynthetischen Organismen in einer kontrollierten Umgebung ausführt und auf diese Weise die Beseitigung des übermäßigen Sauerstoffs ermöglicht, der während der Photosynthese produziert wird.

13. Verwendung des Systems (14) gemäß Patentanspruch 1 oder 2, in dem die genannte mindestens eine Flüssigkeitshandhabungsvorrichtung (24) die Zucht der Organismen ausführt, sodass alle Zellen in der Zucht regelmäßig alle vorgesehenen Vorrichtungen durchlaufen und die notwendigen Behandlungen erhalten.

## Revendications

1. Système (14) pour la production d'organismes photosynthétiques dans des conditions contrôlées comprenant :
▪ au moins un appareil (16) pour l'exposition des liquides de culture à la lumière du soleil, constitué au moins d'un panneau alvéolaire (1), en matière plastique transparente, en particulier polycarbonate, doté au moins d'un élément d'étanchéité et de raccordement (3) étanche au liquide substantiellement creux dont les parois sont aptes à s'accoupler, en assurant l'étanchéité au liquide, aux parois d'un des canaux (5) dont est doté le panneau alvéolaire (1) ; par ailleurs, chaque élément d'étanchéité et de raccordement (3) étanche au liquide comprend au moins une pièce (7) étanche au liquide apte à être accouplée opérationnellement à une pièce (7) relative dont est doté un autre élément d'étanchéité et de raccordement (3) afin de réaliser un circuit hydraulique pressurisé étanche au liquide entre au moins deux canaux (5) du panneau alvéolaire (1) ;
▪ au moins un appareil (18) de mise en mouvement des liquides relié opérationnellement au susdit l'appareil (16) ; et
▪ au moins un appareil (20) d'administration d'éléments nutritifs relié opérationnellement au susdit appareil (16) pour l'exposition des liquides de culture à la lumière du soleil et au susdit appareil (18) de mise en mouvement des liquides.

2. Système (14), selon la revendication 1, comprenant en outre :
▪ au moins un appareil (24) de distribution des liquides, qui relie opérationnellement le susdit appareil (16) pour l'exposition de liquides de culture à la lumière du soleil, ainsi que le susdit appareil (18) de mise en mouvement de liquides et le susdit appareil (20) d'administration d'éléments nutritifs ;
▪ au moins un appareil (26) de dégazage relié opérationnellement au susdit appareil (16) pour l'exposition des liquides de culture à la lumière du soleil et du susdit appareil (20) d'administration d'éléments nutritifs ;
▪ au moins un appareil (28) d'inoculation des substances gazeuses, relié opérationnellement au susdit appareil (16) pour l'exposition des liquides de culture à la lumière du soleil, et au susdit appareil (18) de mise en mouvement des liquides à travers le susdit appareil (24) de distribution des liquides ;
▪ au moins un appareil (32) de contrôle et de gestion des paramètres de production du système (14) ;
▪ au moins un appareil (34) de collecte relié en aval du susdit appareil (18) de mise en mouvement des liquides ; et
▪ au moins un appareil (36) de chargement du système (14) relié en amont du susdit appareil (18) de mise en mouvement des liquides.

3. Utilisation du système (14), selon la revendication 1 ou 2 pour la culture et la production d'algues unicellulaires et d'autres micro-organismes photosynthétiques.

4. Utilisation du système (14), selon la revendication 1 ou 2 pour la production et l'extraction de métabolites secondaires ou d'autres substances d'intérêt commercial, pharmaceutique et biomédical.

5. Utilisation du système (14), selon la revendication 1 ou 2 pour l'épuration des eaux usées d'origine civile, industrielle et agro-zootechnique.

6. Utilisation du système (14), selon la revendication 1 ou 2 pour l'assimilation du dioxyde de carbone.

7. Utilisation du système (14), selon la revendication 1 ou 2, où au moins un appareil (20) d'administration d'éléments nutritifs utilise des eaux usées d'origine civile, industrielle et agro-zootechnique comme source de nutriment des organismes cultivés.

8. Utilisation du système (14), selon la revendication 1 ou 2, où au moins un appareil (20) d'administration d'éléments nutritifs utilise du digestat, un résidu des processus de digestion anaérobie des biomasses, comme source de nutriment pour les organismes cultivés.

9. Utilisation du système (14), selon la revendication 1 ou 2, où les biomasses utilisables pour le processus de digestion anaérobie sont produites par le susdit système (14).

10. Utilisation du système (14), selon la revendication 1 ou 2, où au moins un appareil (28) d'inoculation de substances gazeuses utilise les fumées de combustion (29) comme source de nutriment pour les organismes cultivés.

11. Utilisation du système (14), selon la revendication 1 ou 2, où le système (14) est prédisposé pour la récupération de déchets d'autres processus de production qui ne sont pas liés directement au système.

12. Utilisation du système (14), selon la revendication 1 ou 2, où au moins un appareil (26) de dégazage exécute la culture d'organismes photosynthétiques dans un milieu contrôlé, ce qui permet d'éliminer l'excès d'oxygène produit pendant la photosynthèse.

13. Utilisation du système (14), selon la revendication 1 ou 2, où au moins un appareil (24) de mise en mouvement des liquides exécute la culture d'organismes en faisant en sorte que toutes les cellules à l'intérieur de la culture traversent périodiquement tous les appareils prévus et reçoivent les traitements nécessaires.
